# EUROPÄISCHE PATENTSCHRIFT

(11) **EP 3 529 038 B1**
(45) Veröffentlichungstag und Bekanntmachung des Hinweises auf die Patenterteilung: **17.01.2024**
(21) Anmeldenummer: 17793580.6
(22) Anmeldetag: 11.10.2017
(51) Int. Cl.: B29C 48/92, B29C 48/08, B29C 48/02, B29C 48/10, G06Q 10/10

(54) **VERWENDUNG EINER KUNSTSTOFF-EXTRUSIONSANLAGE MIT MOBILER NUTZERSCHNITTSTELLE UND VERFAHREN ZUM BETRIEB EINER KUNSTSTOFF-EXTRUSIONSANLAGE**
USE OF PLASTIC EXTRUSION EQUIPMENT WITH MOBILE USER INTERFACE AND METHOD FOR OPERATING A PLASTIC EXTRUSION EQUIPMENT
UTILISATION D'UNE INSTALLATION D'EXTRUSION DE MATIÈRE PLASTIQUE MUNIE D'UNE INTERFACE UTILISATEUR MOBILE ET PROCÉDÉ DE FONCTIONNEMENT D'UNE INSTALLATION D'EXTRUSION DE MATIÈRE PLASTIQUE

(30) Priorität: 18.10.2016 DE 102016119868
(43) Veröffentlichungstag der Anmeldung: 28.08.2019
(73) Patentinhaber: Reifenhäuser GmbH & Co. KG Maschinenfabrik, 53844 Troisdorf (DE)
(72) Erfinder: RÖSNER, Andreas, 53113 Bonn (DE); FETT, Thomas, 53840 Troisdorf (DE); HILGERS, Mark, 53844 Troisdorf (DE); LETTOWSKY, Christoph, 52074 Aachen (DE); MAGER, Jens, 50968 Köln (DE); STELTER, Christian, 55218 Ingelheim (DE); VODENCAREVIC, Asmir, 90763 Fürth (DE)
(74) Vertreter: Andrejewski - Honke Patent- und Rechtsanwälte Partnerschaft mbB
(86) Internationale Anmeldenummer: PCT/EP2017/075990
(87) Internationale Veröffentlichungsnummer: WO 2018/073084

(56) Entgegenhaltungen:
- EP-A1- 1 382 430
- EP-A2- 2 592 812
- CN-A- 104 842 472
- JP-A- 2002 036 339
- KR-A- 20160 065 350
- US-A1- 2002 031 567
- US-A1- 2009 204 423
- US-A1- 2014 043 441
- US-A1- 2014 244 017
- US-A1- 2014 271 964
- US-A1- 2015 306 823
- Anonymous: "Extrusion I Cast & Blow Film Lines I Quality Control R & D, QC, Lab & on-line application The solution for the polymer & petrochemical industries", , 17 August 2010 (2010-08-17), XP055322614, Retrieved from the Internet: URL:www.ocsgmbh.com [retrieved on 2016-11-24]
- Covestro ET AL: "glasswool filled Makrolon", plastverarbeiter, 1 September 2016 (2016-09-01), page 126, XP055726385, Hüthig GmbH, Im Weiher 10, 69121 Heidelberg Retrieved from the Internet: URL:https://www.plastverarbeiter.de/wp-con tent/uploads/2016/09/PV_9_2016_Gesamt-scre en_final.pdf [retrieved on 2020-08-31]

## Beschreibung

Die Erfindung betrifft die Verwendung einer Kunststoff-Extrusionsanlage sowie ein Verfahren zum

Betrieb einer Kunststoff-Extrusionsanlage. Die Kunststoff-Extrusionsanlage weist eine Mehrzahl an Anlagenkomponenten auf, wobei die Mehrzahl an Anlagenkomponenten einen Extruder und eine Sammeleinrichtung zum Sammeln des extrudierten Kunststoffes umfasst. Die Mehrzahl an Anlagenkomponenten enthält ferner ein Anlagenleitsystem zur Steuerung beziehungsweise Regelung der Kunststoff-Extrusionsanlage. Zwecks Bedienung des Anlagenleitsystems ist außerdem eine Nutzerschnittstelle vorgesehen, welche beispielsweise einen Monitor und eine Tastatur enthält.

Derartige Kunststoff-Extrusionsanlagen sind aus den Druckschriften US 2002/031567 A1, EP 1 382 430 A1, CN 104 842 472 A, US 2014/271964 A1, JP 2002 036339 A, US 2015/306823 A1, US 2014/043441 A1, EP 2 592 812 A2, US 2014/244017 A1, US 2009/204423 A1 und KR 2016 0065350 A hinlänglich bekannt. Nachteilig ist jedoch, dass aufgrund dieser hinlänglich bekannten Ausgestaltung von Kunststoff-Extrusionsanlagen der Betrieb und die Überwachung der laufenden Produktion aufwendig ist. Denn für den Betrieb und die Überwachung der laufenden Produktion ist es erforderlich, dass der zuständige Mitarbeiter unmittelbar vor Ort Zugriff hat auf eine große Fülle an Informationsquellen. Ein der Kunststoff-Extrusionsanlage zugeordneter Rechner, beispielsweise in Form eines Anlagenservers, bietet einen solchen umfangreichen Zugriff jedoch nicht.

Außerdem müssen häufig Fotos oder Videos von der laufenden Produktion beziehungsweise von im Betrieb befindlichen Anlagenkomponenten aufgenommen werden, um die Produktion zu überwachen beziehungsweise im Falle von Warnmeldungen nach Fehlern zu suchen. Solche Daten müssen dann umständlich, beispielsweise auf den Anlagenserver, übertragen werden und dort weiter untersucht werden beziehungsweise mit anderen Informationen aus anderen Informationsquellen verknüpft werden. Auch dies bedeutet einen nicht unerheblichen Aufwand, um allein den laufenden Betrieb gewährleisten zu können.

Der Erfindung liegt daher die technische Aufgabe zugrunde, den Aufwand während der Produktion zu verringern. Insbesondere liegt der Erfindung die Aufgabe zugrunde, den Bedienkomfort der Kunststoff-Extrusionsanlage erheblich zu verbessern.

Zur Lösung dieser technischen Aufgabe lehrt die Erfindung die Verwendung einer Kunststoff-Extrusionsanlage, aufweisend eine Mehrzahl an Anlagenkomponenten gemäß dem Anspruch 1.

Die Kunststoff-Extrusionsanlage ist zur Herstellung von Vlieser oder Folien und insbesondere von Vliesen mit Filamenten (Faserlänge entsprechend Produktionsdauer) ausgelegt. Besonders bevorzugt handelt es sich im Falle der Kunststoff-Extrusionsanlage um eine Meltblown- oder Spunbond-Anlage. Gemäß einer zweiten bevorzugten Ausführungsform dient die Kunststoff-Extrusionsanlage zur Herstellung von von Blasfolien.

Die Mehrzahl an Anlagenkomponenten umfasst zweckmäßigerweise eine Behandlungsvorrichtung zur Behandlung des extrudierten Kunststoffes, wobei die Behandlungsvorrichtung zweckmäßigerweise stromabwärts des Extruders und stromaufwärts der Sammeleinrichtung angeordnet ist. Die Behandlungsvorrichtung umfasst beispielsweise eine Spinnerette und/oder eine oder mehrere Walzen und/oder eine Vorrichtung zur Aufrechterhaltung einer Folienblase. Die Mehrzahl an Anlagenkomponenten umfasst besonders bevorzugt ein Anlagenleitsystem. Das Anlagenleitsystem ist dazu ausgebildet, den Extruder und/oder die Behandlungsvorrichtung und/oder die Sammeleinrichtung anzusteuern.

Der Ausdruck "mobiles Endgerät" umfasst insbesondere ein Tablet, ein Smartphone, eine Smartwatch oder eine Datenbrille. Der Ausdruck "Bildschirm" meint insbesondere auch die Bildschirme von Datenbrillen, welche nur dem jeweiligen Träger der Datenbrille zugänglich sind. Die Nutzerschnittstelle ist bevorzugt mittels Gestensteuerung und/oder Blicksteuerung und/oder Sprachsteuerung bedienbar. Der Begriff "Gestensteuerung" meint insbesondere nicht die Bedienung mittels einer Tastatur, deren Tasten physikalisch festgelegt sind.

Es ist zweckmäßig wenn die Schnittstelle dazu ausgebildet ist, wenigstens eine, vorzugsweise mehrere und bevorzugt alle der Anlagenkomponenten zu steuern. Die Kunststoff-Extrusionsanlage umfasst vorteilhafterweise ein Anlagenleitsystem, wobei die Nutzerschnittstelle vorzugsweise ausgebildet ist, dass Anlagenleitsystem zu steuern, wodurch zweckmäßigerweise zugleich eine oder mehrere der Anlagenkomponenten steuerbar sind. Die Nutzerschnittstelle beziehungsweise das Anlagenleitsystem sind bevorzugt dazu ausgebildet, die eine Anlagenkomponente oder die mehreren Anlagenkomponenten unter automatischer Berücksichtigung von Verordnungen beziehungsweise Vorschriften zu steuern. Die Verordnungen beziehungsweise Vorschriften können gesetzliche, betriebliche oder den Arbeitsschutz betreffende Regelungen sein.

Gemäß einer besonders bevorzugten Ausführungsform ist die Nutzung der Schnittstelle kontextsensitiv. Der Ausdruck "kontextsensitiv" meint insbesondere eine an die jeweilige Situation angepasste graphische Oberfläche der Nutzerschnittstelle. Vorzugsweise wird je nach Situation ein Auswahlmenü angepasst. So kann die Nutzerschnittstelle beispielsweise ortsensitiv sein, wodurch die Nutzerschnittstelle die eigene Position erkennt. In diesem Falle kann sich die Kontextsensitivität der Nutzschnittstelle darin zeigen, dass die in der Nähe befindlichen Anlagenkomponenten auf dem Bildschirm der Nutzerschnittstelle angegeben werden. Ferner kann die Nutzerschnittstelle sensitiv bezüglich Anlagenkomponenten sein und beispielsweise die Anlagenkomponenten identifizieren. in einem solchen Falle kann sich die Kontextsensitivität der Nutzerschnittstelle dahingehend ausprägen, dass die entsprechende Anlagenkomponente auf dem Bildschirm der Nutzerschnittstelle genannt wird und/oder momentane Verfahrensparameter oder ein Verlauf von einem Verfahrensparameter oder mehreren Verfahrensparametern auf dem Bildschirm angezeigt wird. Schließlich ist es möglich, dass die Nutzerschnittstelle wartungssensitiv ist. Beispielsweise kann die Nutzerschnittstelle an reguläre Wartungstermine erinnern oder im Falle eines Warnsignales eine direkt anwählbare Telefonnummer eines technischen Dienstes des Anbieters einblenden.

Gemäß einer bevorzugten Ausführungsform ist die Nutzerschnittstelle lernfähig und weist insbesondere eine lernfähige Kontextsensivität auf. Die Lernfähigkeit beruht vorzugsweise auf einer Interpolation des bisherigen Verhaltens des Nutzers. Insbesondere wird durch die Lernfähigkeit die graphische Oberfläche auf den jeweiligen Kontext angepasst. Beispielsweise kann bei einem bestimmten Kontext eine entsprechende Anzeige eines angepassten Auswahlmenüs erfolgen. Wenn etwa der Nutzer bisher einen oder mehrere Menüpunkte dieses Auswahlmenüs im Falle dieses Kontextes häufiger ausgewählt hat, dann werden die häufiger ausgewählten Menüpunkte hervorgehoben oder deren Inhalt gleich vollständig angezeigt.

Die Kunststoff-Extrusionsanlage umfasst ein Lesemodul, wobei das Lesemodul derart ausgebildet ist, das es anhand von Lesedaten betreffend eine Anlagenkomponente die Anlagekomponente identifizieren kann. Es ist bevorzugt, dass an wenigstens einer Anlagenkomponente ein Marker, beispielsweise ein QR-Code oder ein RFID-Chip angeordnet ist. Das Lesemodul ist zweckmäßigerweise dazu ausgebildet, den Marker auszulesen. Die Lesedaten sind beispielsweise QR-/Strichcodes beziehungsweise RFID-Daten. Gemäß einer anderen Ausführungsform bildet die Kamera zusammen mit einer Objekterkennungssoftware das Lesemodul. So kann die Nutzerschnittstelle mit Hilfe der Kamera und der Objekterkennungsoftware eine oder mehrere Anlagekomponenten identifizieren. In diesem Falle entsprechen die Lesedaten beispielsweise einem Foto oder Video der jeweiligen Anlagenkomponente.

Die Nutzerschnittstelle ist ausgebildet, Informationen aus der wenigstens eine Informationsquelle beziehungsweise aus mehreren der Mehrzahl an Informationsquellen betreffend die identifizierte Anlagenkomponente auf dem Bildschirm der Nutzerschnittstelle darzustellen, welche Informationen über den Informationsinhalt der durch das Lesemodul ausgelesenen Lesedaten hinausgehen. Hierdurch wird eine Verknüpfung der jeweiligen Anlagenkomponente unmittelbar mit den Informationsquellen erreicht. So ist es beispielsweise möglich, vor Ort (beispielsweise unmittelbar vor der Anlagenkomponente selber) folgende Informationen auf dem Bildschirm der Nutzerschnittstelle anzuzeigen: Momentane Verfahrensparameter und/oder Verläufe von Verfahrensparametern und/oder Steuereinstellungen und/oder in Frage kommende Ersatzteile für die Kunststoff-Extrusionsanlage und/oder eine Kommunikationsmöglichkeit des Anbieters und/oder eines Rohstofflieferanten (Telefonnummer, automatisch entworfene Email zwecks Bestellungen oder dergleichen) und/oder kaufmännische Daten (noch im Lager vorrätige Rohstoffmenge, bereits getätigte Nachbestellungen und dergleichen) und/oder eine Kommunikationsmöglichkeit eines Kunden.

Vorteilhafterweise enthält die Mehrzahl an Informationsquellen eine Informationsquelle bezüglich Verfahrensparameter. Zweckmäßigerweise umfasst die Kunststoff-Extrusionsanlage wenigstens einen Sensor zur Erfassung eines Verfahrensparameters und vorzugsweise mehrere Sensoren zur Erfassung von mehreren Verfahrensparametern. Die Informationsquelle bezüglich Verfahrensparametern liefert bevorzugt wenigstens einen Momentanwert beziehungsweise mehrere Momentanwerte von Verfahrensparametern. Es ist möglich, dass die Übertragung der Momentwerte direkt auf die Nutzerschnittstelle stattfindet. Die Informationsquelle bezüglich Verfahrensparametern können der Sensor beziehungsweise die Sensoren selbst sein. Gemäß einer anderen Ausführungsform können die Momentanwerte zunächst in einer Datenbank zwischengespeichert sein. Hierdurch können beispielsweise Werteverläufe des beziehungsweise der Verfahrensparameter aufgezeichnet werden. Die Nutzerschnittstelle kann Zugriff haben auf die Datenbank mit den gespeicherten Werteverläufen haben. Die Informationsquelle bezüglich Verfahrensparameter weist bevorzugt eine Datenbank mit gespeicherten Werteverläufen von einem oder mehreren Sensoren und/oder Momentanwerte von einem oder mehreren Sensoren auf.

Es ist bevorzugt, dass die Mehrzahl an Informationsquellen eine Informationsquelle bezüglich kaufmännischer Daten enthält. Der Ausdruck "kaufmännische Daten" meint insbesondere betriebliche Informationen, beispielsweise bezüglich Bestellvorgängen und/oder Rechnungen und/oder Lieferungen und/oder Auftragseingängen oder/Produktion und/oder Lagerhaltung und/oder Personalwesen und/oder Vertrieb und/oder Buchführung und/oder Controlling und/oder Qualitätsmanagement. Vorzugsweise umfasst die Informationsquelle bezüglich kaufmännischer Daten eine Datenbank.

Gemäß einer besonders bevorzugten Ausführungsform weist die Mehrzahl an Informationsquellen eine Informationsquelle mit einer Kommunikationsschnittstelle zu einem Anbieter der Kunststoff-Extrusionsanlage und/oder einem Rohstofflieferanten auf, wobei vorzugsweise die Kommunikationsschnittstelle eine Schnittstelle zu einem technischen Service und/oder zu einem Vertrieb und/oder zu einer Datenbank mit technischen Informationen des Anbieters und/oder des Rohstofflieferanten umfasst. Der Begriff "Vertrieb" meint z.B. einen Vertriebsservice und/oder ein Warenwirtschaftssystem des Anbieters und/oder des Rohstofflieferanten. Die Datenbank mit technischen Informationen wird vorzugsweise mit technischem Grundlagen- und/oder Detailwissen und/oder mit Erfahrungswerten gefüllt. Die Füllung findet vorzugsweise statt durch den Anbieter und/oder den Nutzer und/oder weiteren Nutzern.

Vorteilhafterweise ist die Nutzerschnittstelle eingerichtet, am Ort der Kunststoff-Extrusionsanlage mit Daten der Kunststoff-Extrusionsanlage, insbesondere Bilddaten der laufenden Produktion, zum Anbieter zu übertragen.

Zweckmäßigerweise umfasst die Nutzerschnittstelle einen Nachrichtendienst. Die Nutzerschnittstelle kann dazu eingerichtet sein, Videokonferenzen und/oder Telefonkonferenzen durchzuführen. Gemäß weiteren vorteilhaften Ausgestaltungen umfasst die Nutzerschnittstelle eine Bildschirmumschaltungsfunktion und/oder eine Whiteboardfunktion.

Es ist besonders vorteilhaft, wenn die Nutzerschnittstelle so eingerichtet ist, das zu einer aktiven oder passiven Auswahl wenigstens einer der Anlagenkomponenten automatisch Informationen aus wenigstens einer der Mehrzahl der Informationsquellen auf der graphischen Oberfläche der Nutzerschnittstelle angeboten oder angezeigt werden. Der Ausdruck "aktive Auswahl" meint insbesondere eine vom Nutzer initiativ getätigte Auswahl einer oder mehrerer der Anlagenkomponenten. Dies kann beispielsweise das Einlesen eines QR-Codes sein oder das Eintippen einer Nummer einer Anlagenkomponente. Der Ausdruck "passive Auswahl" hingegen meint insbesondere eine nicht vom Nutzer getätigte Auswahl. Dies kann beispielsweise ein Warnsignal von einer oder mehrerer der Anlagenkomponenten und/oder von Sensoren und/oder von dem Anlagenleitsystem sein. Der Begriff "anbieten" meint bevorzugt, das dem Nutzer auf der graphischen Oberfläche entsprechende Auswahlmöglichkeiten zu Informationen der betreffenden Anlagenkomponente dargestellt werden. Der Begriff "anzeigen" meint, dass die Informationen nicht erst noch ausgewählt werden müssen, sondern wenigstens teilweise direkt auf der graphischen Oberfläche abgebildet werden. Diese Informationsdarstellung ist eine besonders bevorzugte Ausführungsform der Kontextsensitivität.

Es ist bevorzugt, dass der Bildschirm berührungsempfindlich ist und vorzugsweise eine Bildschirmdiagonale größer oder gleich 4 Zoll aufweist. Insbesondere ist die Nutzerschnittstelle so eingerichtet, dass eine Tastatur kontextsensitiv erscheint. Die Bildschirmdiagonale ist vorzugsweise wenigstens 5, bzw. 6 bzw. 7 Zoll groß. Zweckmäßigerweise ist die Bildschirmdiagonale kleiner 14 Zoll bzw. 12 Zoll. Gemäß einer besonders bevorzugten Ausführungsform umfasst die Nutzerschnittstelle die Möglichkeit einer Funkanbindung, bevorzugt einer WLan- und/oder Mobilfunkanbindung und/oder eine Bluetooth-Schnittstelle.

Nach einer sehr bevorzugten Ausführungsform ist die Nutzerschnittstelle so ausgebildet, dass eine Übertragung von Daten nur auf Anweisung bzw. Zustimmung des Nutzers geschieht. Zweckmäßigerweise ist die Nutzerschnittstelle so eingerichtet, dass bei einem Installationsprozess eine Initialabfrage stattfindet, bei welcher dem Anbieter Zugriffsrechten zugestandenen werden können. Die Zugriffsrechte beziehen sich insbesondere auf Verfahrensparameter. Vorteilhafterweise ist die Nutzerschnittstelle so ausgebildet, dass im Falle eines Zugestehens von Zugriffsrechten der Nutzer seinerseits Zugriff hat auf eine Datenbank mit technischen Informationen des Anbieters. Die Nutzerschnittstelle kann außerdem so eingerichtet sein, dass im Falle von Wartungsanfragen der Nutzer ausdrücklich gefragt wird, beispielsweise mittels eines entsprechenden Pop-Up-Fensters, ob und welche technischen Daten betreffend die Kunststoff-Extrusionsanlage an den Anbieter übertragen werden dürfen.

Es ist zweckmäßig, wenn die graphische Oberfläche zwecks Gestensteuerung auswählbare Symbole aufweist, wobei wenigstens einige der auswählbaren Symbole in einem Teil- oder Vollkreis an einem Rand der graphischen Oberfläche zwecks Erreichbarkeit mittels Daumen angeordnet sind. Vorzugsweise sind wenigstens zwei Teil- beziehungsweise Vollkreise auf der graphischen Oberfläche dargestellt. Weiter vorzugsweise sind beide Teilbeziehungsweise Vollkreise je einem Rand der graphischen Oberfläche zugeordnet, wobei bevorzugt die beiden Ränder einander gegenüberliegen. Es ist zweckmäßig, wenn Kreisradius, Symbolgröße, -anzahl, -abstand, - beschriftung, -grafik frei wählbar zwecks individueller Einstellung sind. Es ist möglich, dass die auswählbaren Symbole in den nichtsichtbaren Bereich der graphischen Oberfläche bewegbar, insbesondere drehbar sind. Gemäß einer vorteilhaften Ausführungsform bietet die Nutzerschnittstelle eine Auswahl an zur Verfügung stehenden Sprachen für die graphische Oberfläche an.

Gemäß einer besonders bevorzugten Ausführungsform umfasst die Mehrzahl an Informationsquellen eine Informationsquelle betreffend eine Dokumentation der Kunststoff-Extrusionsanlage. Die Informationsquelle betreffend die Dokumentation kann beispielsweise auf der Nutzerschnittstelle selber, auf einem Anlagenserver, einem beliebigen anderen Rechner des Nutzers oder auf einem Rechner des Anbieters der Kunststoff-Extrusionsanlage befindlich sein. Der Begriff "Dokumentation" meint insbesondere Bedienvorschriften, eine Auflistung häufiger Warnmeldungen nebst jeweils empfohlener Reaktionen, Tutorials und dergleichen mehr. Die Dokumentation kann vom Anbieter stammen und/oder durch den Nutzer ergänzt werden.

Zur Lösung der technischen Aufgabe lehrt die Erfindung ein Verfahren gemäß dem Anspruch 13 zum Betrieb einer Kunststoff-Extrusionsanlage.

Der Erfindung liegt die Erkenntnis zugrunde, dass der Betrieb und die Überwachung der laufenden Produktion von herkömmlichen Kunststoff-Extrusionsanlagen mit einem teilweise erheblichen Aufwand verbunden ist. Dieser Aufwand resultiert daraus, dass zum Betrieb von modernen Kunststoff-Extrusionsanlagen sehr große Mengen an Informationen beherrscht werden müssen. Die Informationen sind verschiedenen Informationsquellen zuordenbar, wobei aber bisher die Informationsquellen verstreut angeordnet sind. So muss der zuständige Mitarbeiter häufig Zugriff auf eine erste Informationsquelle erlangen, um danach Zugriff auf eine weitere Informationsquelle zu nehmen. Nicht selten bedarf es dann noch des Zugriffes auf eine weitere Informationsquelle. In den aus der Praxis bekannten Fällen von Kunststoff-Extrusionsanlagen war zumeist für jede Informationsquelle ein eigenes elektronisches Gerät erforderlich, so dass der Mitarbeiter häufig die Räumlichkeiten wechseln musste. Dies war nicht selten mit erheblichen Reibungsverlusten verbunden. Mit der vorliegenden Erfindung wurde dieses Problem gelöst und der Aufwand deutlich verringert.

Nachfolgend wird die Erfindung anhand der schematischen Figur erläutert.

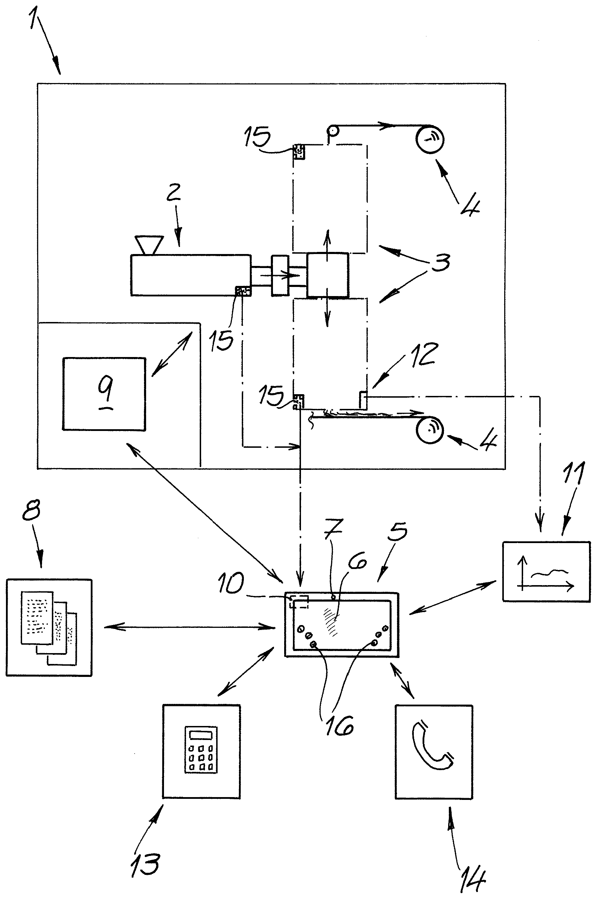

In der Figur ist eine beispielhafte Ausführungsform einer erfindungsgemäßen Kunststoff-Extrusionsanlage gezeigt. Die Kunststoff-Extrusionsanlage weist zunächst eine Mehrzahl 1 an Anlagenkomponenten 2, 3, 4, 9 auf. Ein Extruder 2 extrudiert Kunststoff, welcher dann in einer Behandlungsvorrichtung 3 behandelt und schließlich von einer Sammeleinrichtung 4 aufgesammelt wird. Die Behandlungsvorrichtung 3 kann beispielsweise eine Spinnerette umfassen, so dass der extrudierte Kunststoff in Form eines Vlieses zunächst abgelegt und dann auf der Sammeleinrichtung 4 in Form einer Wickelrolle aufgerollt wird. Dies ist durch den unteren Abschnitt der Behandlungsvorrichtung 3 in der Figur symbolisiert. Die Behandlungsvorrichtung 3 kann aber auch eine Vorrichtung zur Aufrechterhaltung einer Folienblase sein, wobei die Sammeleinrichtung 4 dann anstelle des Vlieses eine Blasfolie aufwickelt. Dies ist durch den oberen Abschnitt der Behandlungsvorrichtung 3 angedeutet. Es wird darauf hingewiesen, dass die Behandlungsvorrichtung 3 bevorzugt nur für eine Extrusionsart ausgelegt ist und entweder den oberen oder den unteren Abschnitt der Behandlungsvorrichtung 3 umfasst. Die Anlagenkomponenten 2, 3, 4 werden bevorzugt auch durch die Anlagenkomponente 9 in Form eines Anlagenleitsystems angesteuert.

Die Kunststoff-Extrusionsanlage weist ferner eine Nutzerschnittstelle 5 auf, welche in diesem Ausführungsbeispiel als ein Tablet mit einem berührungsempfindlichen Bildschirm 6 mit einer graphischen Oberfläche 6 ausgebildet ist und eine Kamera 7 enthält. Die Nutzerschnittstelle weist ferner ein Lesemodul 10 in Form eines Laserscanners auf. Die graphische Oberfläche der Nutzerschnittstelle 5 umfasst insbesondere auswählbare Symbole 16, wobei die auswählbaren Symbole 16 in zwei Teilkreisen rechts und links an den Rändern zwecks Daumensteuerung angeordnet sind.

Die Nutzerschnittstelle 5 ist in diesem Ausführungsbeispiel dazu ausgebildet, das Anlagenleitsystem 9 und über dieses auch die anderen Anlagenkomponenten 2, 3, 4 anzusteuern. Darüber hinaus hat die Nutzerschnittstelle 5 Zugriff auf eine Informationsquelle 8 betreffend eine Dokumentation der Kunststoff-Extrusionsanlage, eine Informationsquelle 11 bezüglich Verfahrensparameter in Form einer Datenbank enthaltend diese Verfahrensparameter sowie auf eine Informationsquelle 13 bezüglich kaufmännischer Daten. Die Informationsquelle bezüglich kaufmännischer Daten umfasst ebenfalls eine Datenbank. Die Nutzerschnittstelle 5 weist außerdem eine Bluetooth-, eine WLAN- sowie eine Mobilfunkschnittstelle auf, so dass der Nutzer über die Informationsquelle 14 unmittelbar in Kontakt mit dem Anbieter der Kunststoff-Extrusionsanlage und/oder mit einem Rohstofflieferanten treten kann. Die Nutzerschnittstelle 5 ist insbesondere dazu eingerichtet, Telefon- und/oder Videokonferenzen durchzuführen.

Im vorliegenden Ausführungsbeispiel weisen der Extruder 2 und die Behandlungsvorrichtung 3 jeweils einen QR-Code in Form eines Aufklebers auf. Anhand des QR-Codes kann das Lesemodul 10 die einzelnen Anlagenkomponenten 2, 3, 4 identifizieren. Gemäß einer anderen Ausführungsform kann mithilfe der Kamera 7 und einer Objekterkennungssoftware die Identifizierung der jeweiligen Anlagenkomponente 2, 3, 4, 9 auch ohne QR-Code stattfinden. Schließlich sind die Anlagenkomponenten 2, 3, 4 noch mit Sensoren 12 versehen, so wie dies beispielhaft an einem Sensor 12 an der Behandlungsvorrichtung 3 in der Figur ersichtlich ist. Der Sensor 12 ermittelt fortlaufend Momentanwerte eines Verfahrensparameters. Die Werte des oder der Verfahrensparameter werden in der Informationsquelle 11 bezüglich Verfahrensparameter gespeichert, worauf die Nutzerschnittstelle 5 Zugriff hat.

Nachfolgend werden typische Situationen geschildert, denen die Erfindung besondere Rechnung trägt. Beispielsweise erhält die Nutzerschnittstelle 5 von einer Anlagenkomponente 2, 3, 4, 9 oder einem Sensor 12 ein Warnsignal zu einer bestimmten Anlagenkomponente 2, 3, 4, 9. Aufgrund der kontextsensitiven Nutzerschnittstelle 5 wird sogleich eine Abbildung der entsprechenden Anlagenkomponente 2, 3, 4, 9 nebst Bezeichnung auf der grafischen Oberfläche der Nutzerschnittstelle 5 dargestellt. Die Warnung geschieht beispielsweise akustisch oder optisch und ist wie in diesem Beispielsfalle mit dem Hinweis versehen, dass der Mitarbeiter sich zu der entsprechenden Anlagenkomponente 2, 3, 4, 9 begeben soll.

Vor der entsprechenden Anlagenkomponente 2, 3, 4 angelangt, kann der Mitarbeiter mit bloßem Auge jedoch nichts Ungewöhnliches feststellen. Allerdings bietet ein kontextsensitives Auswahlmenü der graphischen Oberfläche der Nutzerschnittstelle 5 an, dass der Verlauf eines bestimmten Verfahrensparameters betrachtet werden kann. Dieser Verlauf erscheint dem Mitarbeiter verdächtig, jedoch weiß er nicht, wie in einem solchen Falle zu reagieren ist.

Aus diesem Grunde wird ihm zugleich über einen weiteren hervorgehobenen Punkt im Auswahlmenü ein Zugriff auf die Informationsquelle 8 mit der Dokumentation ermöglicht. Dieser Informationsquelle 8 ist zu entnehmen, dass es im Falle der besagten Anomalie der Einschaltung des technischen Services des Anbieters bedarf. Aus diesem Grunde ist in der graphischen Oberfläche zugleich eine Telefonnummer des technischen Services des Anbieters hervorgehoben. Durch einfaches Antippen wählt der Mitarbeiter die Telefonnummer und erfährt so dann vom technischen Service des Anbieters, dass ein Video an einer bestimmten Position der besagten Anlagenkomponente 2, 3, 4, 9 aufgenommen werden muss. Der Mitarbeiter begibt sich an die besagte Position und nimmt das Video auf, welches sogleich über die Nutzerschnittstelle an den technischen Service übertragen wird. Der technische Service erkennt das Problem, gibt entsprechende Anweisungen oder lässt einen Außendienstmitarbeiter vorbeikommen.

Gemäß einer anderen Situation nimmt der Mitarbeiter eine Routinekontrolle vor. Er stellt eine Anomalie an einer bestimmten Anlagenkomponente 2, 3, 4, 9 fest und scannt den entsprechenden QR-Code 15. Sodann wird auf der Nutzerschnittstelle 5 die entsprechende Anlagenkomponente 2, 3, 4, 9 nebst Bezeichnung dargestellt und der Mitarbeiter kann auf die Verläufe der entsprechenden Verfahrensparameter zugreifen, welche aber keine Mehrwürdigkeit aufweisen. Danach wendet sich der Mitarbeiter nacheinander an die Informationsquellen 8 und 14, bis das Problem behoben ist.

In einer weiteren Situation erreicht den Nutzer ein Warnhinweis, dass der Rohstoff in der Kunststoff-Extrusionsanlage zur Neige geht. Ihm wird in einem Auswahlmenü angeboten, auf die Informationsquelle 13 betreffend kaufmännische Daten zuzugreifen. Dieser ist zu entnehmen, dass erst vor kurzem eine größere Menge an Rohstoff in Form eines bestimmten Kunststoffes geordert wurde, welche sich bereits auf Lager befindet. Zugleich wird eine Telefonnummer des Lageristen eingeblendet. Ferner wird die Möglichkeit der Absendung einer vorgefertigten E-Mail an den Rohstofflieferanten zwecks weiterer Nachbestellung angeboten.

## Patentansprüche

1. Verwendung einer Kunststoff-Extrusionsanlage zur Herstellung von Vliesen oder Folien, umfassend eine Mehrzahl (1) an Anlagenkomponenten (2, 3, 4, 9), wobei die Mehrzahl (1) an Anlagenkomponenten (2, 3, 4, 9) einen Extruder (2) und eine Sammeleinrichtung (4) zum Sammeln des extrudierten Kunststoffes aufweist,
wobei die Kunststoff-Extrusionsanlage eine Nutzerschnittstelle (5) umfasst, wobei die Nutzerschnittstelle (5) für die Ein- und Ausgabe von Daten der Kunststoff-Extrusionsanlage ausgebildet ist, wobei die Nutzerschnittstelle (5) ein mobiles Endgerät mit einem Bildschirm (6) mit einer graphischen Oberfläche aufweist, wobei die Nutzerschnittstelle (5) eine Kamera (7) enthält,
wobei der Kunststoff-Extrusionsanlage wenigstens eine Informationsquelle (8, 11, 13, 14) und vorzugsweise eine Mehrzahl an Informationsquellen (8, 11, 13, 14) zugeordnet ist, wobei die Nutzerschnittstelle (5) so eingerichtet ist, das sie Zugriff auf die wenigstens eine Informationsquelle (8, 11, 13, 14) und vorzugsweise auf die Mehrzahl an Informationsquellen (8, 11, 13, 14) bietet,
**dadurch gekennzeichnet, dass**
die Nutzerschnittstelle (5) ein Lesemodul (7, 10) umfasst und das Lesemodul (7, 10) derart ausgebildet ist, dass es anhand von Lesedaten betreffend eine Anlagenkomponente (2, 3, 4, 9) die Anlagenkomponente (2, 3, 4, 9) identifizieren kann,
die Nutzerschnittstelle (5) dazu ausgebildet ist, Informationen aus der wenigstens einen Informationsquelle (8, 11, 13, 14) beziehungsweise aus mehreren der Mehrzahl an Informationsquellen (8, 11, 13, 14) betreffend die identifizierte Anlagenkomponente (2, 3, 4, 9) auf dem Bildschirm (6) der Nutzerschnittstelle (5) darzustellen, welche Informationen über den Informationsinhalt der durch das Lesemodul (7, 10) ausgelesenen Lesedaten hinausgehen,
wobei an wenigstens einer Anlagenkomponente (2, 3, 4, 9) ein Marker (15) angeordnet ist und das Lesemodul (7, 10) dazu ausgebildet ist, den Marker (15) auszulesen,
oder
wobei die Kamera (7) zusammen mit einer Objekterkennungssoftware das Lesemodul (7) bildet, um eine oder mehrere Anlagenkomponenten (2, 3, 4, 9) zu identifizieren.

2. Verwendung nach Anspruch 1, wobei die Nutzerschnittstelle (5) ausgebildet ist, wenigstens eine und vorzugsweise mehrere der Anlagenkomponenten (2, 3, 4, 9) anzusteuern.

3. Verwendung nach Anspruch 1 oder 2, wobei die Nutzerschnittstelle (5) kontextsensitiv ist.

4. Verwendung nach einem der Ansprüche 1 bis 3, wobei die Nutzerschnittstelle (5) lernfähig ist und insbesondere eine lernfähige Kontextsensivität aufweist.

5. Verwendung nach einem der Ansprüche 1 bis 4, wobei die Mehrzahl an Informationsquellen (8, 11, 13, 14) eine Informationsquelle (11) bezüglich Verfahrensparametern enthält.

6. Verwendung nach einem der Ansprüche 1 bis 5, wobei die Mehrzahl an Informationsquellen (8, 11, 13, 14) eine Informationsquelle (13) bezüglich kaufmännischer Daten enthält.

7. Verwendung nach einem der Ansprüche 1 bis 6, wobei die Mehrzahl an Informationsquellen (8, 11, 13, 14) eine Informationsquelle (14) mit einer Kommunikationsschnittstelle zu einem Anbieter der Kunststoff-Extrusionsanlage und/oder einem Rohstofflieferanten aufweist, wobei vorzugsweise die Kommunikationsschnittstelle eine Schnittstelle zu einem technischen Service und/oder zu einem Vertrieb und/oder einer Datenbank mit technischen Informationen des Anbieters und/oder des Rohstofflieferanten umfasst.

8. Verwendung nach einem der Ansprüche 1 bis 7, wobei die Nutzerschnittstelle (5) eingerichtet ist, am Ort der Kunststoff-Extrusionsanlage Daten der Kunststoff-Extrusionsanlage, insbesondere Bilddaten der laufenden Produktion, zum Anbieter zu übertragen.

9. Verwendung nach einem der Ansprüche 1 bis 8, wobei die Nutzerschnittstelle (5) so eingerichtet ist, dass zu einer aktiven oder passiven Auswahl wenigstens einer der Anlagenkomponenten ( 2, 3, 4, 9) automatisch Informationen aus wenigstens einer der Mehrzahl der Informationsquellen (8, 11, 13, 14) auf der graphischen Oberflächen der Nutzerschnittstelle (5) angeboten oder angezeigt werden.

10. Verwendung nach einem der Ansprüche 1 bis 9, wobei die Nutzerschnittstelle (5) so ausgebildet ist, dass eine Übertragung von Daten nur auf Anweisung beziehungsweise Zustimmung des Nutzers geschieht.

11. Verwendung nach einem der Ansprüche 1 bis 10, wobei die grafische Oberfläche zwecks Gestensteuerung auswählbare Symbole (16) aufweist, wobei wenigstens einige der auswählbaren Symbole (16) in einem Teil- oder Vollkreis an einem Rand der graphischen Oberfläche zwecks Erreichbarkeit mittels Daumen angeordnet sind.

12. Verwendung nach einem der Ansprüche 1 bis 11, wobei die Mehrzahl an Informationsquellen (8, 11, 13, 14) eine Informationsquelle (8) betreffend eine Dokumentation der Kunststoff-Extrusionsanlage umfasst.

13. Verfahren zum Betrieb einer Kunststoff-Extrusionsanlage zur Herstellung von Vliesen oder Folien, insbesondere einer Kunststoff-Extrusionsanlage gemäß einer der Ansprüche 1 bis 12, wobei die Kunststoff-Extrusionsanlage eine Mehrzahl (1) an Anlagenkomponenten (2, 3, 4, 9) aufweist, wobei die Mehrzahl (1) an Anlagenkomponenten (2, 3, 4, 9) einen Extruder (2) und eine Sammeleinrichtung (4) zum Sammeln des extrudierten Kunststoffes umfasst,
wobei die Kunststoff-Extrusionsanlage eine Nutzerschnittstelle (5) umfasst, wobei die Nutzerschnittstelle (5) für die Ein- und Ausgabe von Daten der Kunststoff-Extrusionsanlage ausgebildet ist, wobei die Nutzerschnittstelle (5) ein mobiles Endgerät mit einem Bildschirm (6) mit einer graphischen Oberfläche umfasst, wobei die Nutzerschnittstelle (5) eine Kamera (7) enthält,
wobei der Kunststoff-Extrusionsanlage wenigstens eine Informationsquelle (8, 11, 13, 14) und vorzugsweise eine Mehrzahl an Informationsquellen (8, 11, 13, 14) zugeordnet werden, wobei die Nutzerschnittstelle (5) so eingerichtet wird, so dass sie auf die wenigstens eine Informationsquelle (8, 11, 13, 14) und vorzugsweise auf die Mehrzahl an Informationsquellen (8, 11, 13, 14) zugreift,
**dadurch gekennzeichnet, dass**,
die Nutzerschnittstelle (5) ein Lesemodul (7, 10) umfasst und das Lesemodul (7, 10) derart ausgebildet ist, dass es anhand von Lesedaten betreffend eine Anlagenkomponente (2, 3, 4, 9) die Anlagenkomponente (2, 3, 4, 9) identifizieren kann,
die Nutzerschnittstelle (5) kontextsensitiv ist und dazu ausgebildet ist, Informationen aus der wenigstens einen Informationsquelle (8, 11, 13, 14) beziehungsweise aus mehreren der Mehrzahl an Informationsquellen (8, 11, 13, 14) betreffend die identifizierte Anlagenkomponente (2, 3, 4, 9) auf dem Bildschirm (6) der Nutzerschnittstelle (5) darzustellen, welche Informationen über den Informationsinhalt der durch das Lesemodul (7, 10) ausgelesenen Lesedaten hinausgehen,
wobei an wenigstens einer Anlagenkomponente (2, 3, 4, 9) ein Marker (15) angeordnet ist und das Lesemodul (7, 10) dazu ausgebildet ist, den Marker (15) auszulesen,
oder
wobei die Kamera (7) zusammen mit einer Objekterkennungssoftware das Lesemodul (7) bildet, um eine oder mehrere Anlagenkomponenten (2, 3, 4, 9) zu identifizieren.

## Claims

1. Use of a plastic extrusion system for producing nonwovens or films, comprising a plurality (1) of system components (2, 3, 4, 9), wherein the plurality (1) of system components (2, 3, 4, 9) comprises an extruder (2) and a collection device (4) for collecting the extruded plastic,
wherein the plastic extrusion system comprises a user interface (5), wherein the user interface (5) is configured for inputting and outputting data of the plastic extrusion system, wherein the user interface (5) comprises a mobile terminal with a screen (6) having a graphical interface, wherein the user interface (5) includes a camera (7),
wherein the plastic extrusion system is assigned at least one information source (8, 11, 13, 14) and preferably a plurality of information sources (8, 11, 13, 14), wherein the user interface (5) is adapted so that it offers access to the at least one information source (8, 11, 13, 14) and preferably to the plurality of information sources (8, 11, 13, 14),
**characterized in that**
the user interface (5) comprises a read module (7, 10) and the read module (7, 10) is configured in such a manner that it can identify the system component (2, 3, 4, 9) based on read data relating to a system component (2, 3, 4, 9),
the user interface (5) is configured to display information from the at least one information source (8, 11, 13, 14) or from several of the plurality of information sources (8, 11, 13, 14) relating to the identified system component (2, 3, 4, 9) on the screen (6) of the user interface (5) which information goes beyond the information content of the read data read out by the read module (7, 10),
wherein a marker (15) is arranged on at least one system component (2, 3, 4, 9) and the read module (7, 10) is configured to read out the marker (15),
or
wherein the camera (7) together with an object identification software forms the read module (7) in order to identify one or more system components (2, 3, 4, 9).

2. Use according to Claim 1, wherein the user interface (5) is configured to control at least one and preferably several of the system components (2, 3, 4, 9) .

3. Use according to Claim 1 or 2, wherein the user interface (5) is context-sensitive.

4. Use according to one of Claims 1 to 3, wherein the user interface (5) is teachable and in particular has a teachable context sensitivity.

5. Use according to one of Claims 1 to 4, wherein the plurality of information sources (8, 11, 13, 14) includes an information source (11) relating to method parameters.

6. Use according to one of Claims 1 to 5, wherein the plurality of information sources (8, 11, 13, 14) includes an information source (13) relating to commercial data.

7. Use according to one of Claims 1 to 6, wherein the plurality of information sources (8, 11, 13, 14) comprises an information source (14) with a communication interface to a vendor of the plastic extrusion system and/or a raw material supplier, wherein preferably the communication interface comprises an interface to a technical service and/or to a distributor and/or to a database with technical information of the vendor and/or of the raw material supplier.

8. Use according to one of Claims 1 to 7, wherein the user interface (5) is adapted to transmit data of the plastic extrusion system at the location of the plastic extrusion system, in particular image data of the ongoing production to the vendor.

9. Use according to one of Claims 1 to 8, wherein the user interface (5) is adapted so that for an active or passive selection of at least one of the system components (2, 3, 4, 9) information from at least one of the plurality of information sources (8, 11, 13, 14) is offered or displayed on the graphical interfaces of the user interface (5).

10. Use according to one of Claims 1 to 9, wherein the user interface (5) is configured so that data is only transmitted upon instruction from or with the consent of the user.

11. Use according to one of Claims 1 to 10, wherein the graphical interface has selectable symbols (16) for gesture control, wherein at least some of the selectable symbols (16) are arranged in a partial or full circle at the edge of the graphical interface so that they can be reached by means of thumbs.

12. Use according to one of Claims 1 to 11, wherein the plurality of information sources (8, 11, 13, 14) comprises an information source (8) relating to a documentation of the plastic extrusion system.

13. Method for operating a plastic extrusion system for producing nonwovens or films, in particular a plastic extrusion system according to one of Claims 1 to 12, wherein the plastic extrusion system comprises a plurality (1) of system components (2, 3, 4, 9), wherein the plurality (1) of system components (2, 3, 4, 9) comprises an extruder (2) and a collecting device (4) for collecting the extruded plastic,
wherein the plastic extrusion system comprises a user interface (5),
wherein the user interface (5) is configured for inputting and outputting data of the plastic extrusion system, wherein the user interface (5) comprises a mobile terminal with a screen (6) having a graphical interface, wherein the user interface (5) contains a camera (7),
wherein the plastic extrusion system is assigned at least one information source (8, 11, 13, 14) and preferably a plurality of information sources (8, 11, 13, 14), wherein the user interface (5) is adapted so that it accesses the at least one information source (8, 11, 13, 14) and preferably the plurality of information sources (8, 11, 13, 14),
**characterized in that**
the user interface (5) comprises a read module (7, 10) and the read module (7, 10) is configured in such a manner that it can identify the system component (2, 3, 4, 9) based on read data relating to a system component (2, 3, 4, 9),
the user interface (5) is context-sensitive and is configured to display information from the at least one information source (8, 11, 13, 14) or from several of the plurality of information sources (8, 11, 13, 14) relating to the identified system component (2, 3, 4, 9) on the screen (6) of the user interface (5) which information goes beyond the information content of the read data read out by the read module (7, 10),
wherein a marker (15) is arranged on at least one system component (2, 3, 4, 9) and the read module (7, 10) is configured to read out the marker (15),
or
wherein the camera (7) together with an object identification software forms the read module (7) in order to identify one or more system components (2, 3, 4, 9).

## Revendications

1. Utilisation d'une installation d'extrusion de matière plastique pour la fabrication de non-tissés ou de films, comprenant une pluralité (1) de composants de l'installation (2, 3, 4, 9), la pluralité (1) de composants de l'installation (2, 3, 4, 9) comportant une extrudeuse (2) et un dispositif collecteur (4), destiné à collecter les matières plastique extrudées,
l'installation d'extrusion de matière plastique comprenant une interface utilisateur (5), l'interface utilisateur (5) étant conçue pour saisir et éditer des données de l'installation d'extrusion de matière plastique, l'interface utilisateur (5) comportant un terminal mobile pourvu d'un écran (6) doté d'une surface graphique, l'interface utilisateur (5) contenant une caméra (7),
à l'installation d'extrusion de matière plastique étant associée au moins une source d'information (8, 11, 13, 14) et de préférence une pluralité de sources d'information (8, 11, 13, 14), l'interface utilisateur (5) étant configurée de sorte à offrir l'accès à l'au moins une source d'information (8, 11, 13, 14) et de préférence à la pluralité de sources d'information (8, 11, 13, 14),
**caractérisée en ce que**
l'interface utilisateur (5) comprend un module de lecture (7, 10) et le module de lecture (7, 10) est conçu de sorte à pouvoir, à l'aide de données de lecture concernant un composant de l'installation (2, 3, 4, 9) identifier le composant de l'installation (2, 3, 4, 9),
l'interface utilisateur (5) étant conçue pour représenter sur l'écran (6) de l'interface utilisateur (5) des informations provenant de l'au moins une source d'information (8, 11, 13, 14), respectivement de plusieurs parmi la pluralité de sources d'information (8, 11, 13, 14) concernant le composant de l'installation (2, 3, 4, 9) identifié, lesquelles informations vont au-delà du contenu informatif des données de lecture lues par le module de lecture (7, 10),
sur au moins un composant de l'installation (2, 3, 4, 9) étant placé au moins un marqueur (15) et le module de lecture (7, 10) étant conçu pour lire le marqueur (15),
ou
conjointement avec un logiciel de reconnaissance d'objets, la caméra (7) constituant le module de lecture (7), destiné à identifier un ou plusieurs composants de l'installation (2, 3, 4, 9).

2. Utilisation selon la revendication 1, l'interface utilisateur (5) étant conçue pour actionner au moins et de préférence plusieurs des composants de l'installation (2, 3, 4, 9).

3. Utilisation selon la revendication 1 ou 2, l'interface utilisateur (5) étant contextuelle.

4. Utilisation selon l'une quelconque des revendications 1 à 3, l'interface utilisateur(5) étant adaptative et faisant preuve notamment d'une sensibilité contextuelle adaptative.

5. Utilisation selon l'une quelconque des revendications 1 à 4, la pluralité de sources d'information (8, 11, 13, 14) contenant une source d'information (11) concernant des paramètres de procédé.

6. Utilisation selon l'une quelconque des revendications 1 à 5, la pluralité de sources d'information (8, 11, 13, 14) contenant une source d'information (13) concernant des données commerciales.

7. Utilisation selon l'une quelconque des revendications 1 à 6, la pluralité de sources d'information (8, 11, 13, 14) comportant une source d'information (14) pourvue d'une interface de communication vers un fournisseur de l'installation d'extrusion de matière plastique et/ou un fournisseur de matières premières, de préférence, l'interface de communication comprenant une interface vers un service technique et/ou vers un service de vente et/ou vers une base de données avec des informations techniques du fournisseur et/ou du fournisseur des matières premières.

8. Utilisation selon l'une quelconque des revendications 1 à 7, l'interface utilisateur (5) étant configurée pour transférer sur le site de l'installation d'extrusion de matière plastique des données de l'installation d'extrusion de matière plastique, notamment des données d'images de la production en cours au fournisseur.

9. Utilisation selon l'une quelconque des revendications 1 à 8, l'interface utilisateur (5) étant configurée de telle sorte que pour une sélection active ou passive d'au moins l'un des composants de l'installation (2, 3, 4, 9), des informations provenant d'au moins l'une parmi la pluralité des source d'information (8, 11, 13, 14) soient automatiquement proposées ou affichées sur la surface graphique de l'interface utilisateur (5) .

10. Utilisation selon l'une quelconque des revendications 1 à 9, l'interface utilisateur (5) étant conçue de telle sorte qu'une transmission de données ne s'effectue que sur instruction, respectivement qu'avec l'autorisation de l'utilisateur.

11. Utilisation selon l'une quelconque des revendications 1 à 10, à des fins de commande gestuelle, la surface graphique comportant des symboles (16) sélectionnables, au moins certains des symboles (16) sélectionnables étant placés dans un cercle partiel ou dans un cercle plein sur un bord de la surface graphique à des fins d'accessibilité à l'aide du pouce.

12. Utilisation selon l'une quelconque des revendications 1 à 11, la pluralité de sources d'information (8, 11, 13, 14) comprenant une source d'information (8) concernant une documentation de l'installation d'extrusion de matière plastique.

13. Procédé opérationnel d'une installation d'extrusion de matière plastique pour la fabrication de non-tissés ou de films, notamment d'une installation d'extrusion de matière plastique selon l'une quelconque des revendications 1 à 12, l'installation d'extrusion de matière plastique comportant une pluralité (1) de composants de l'installation (2, 3, 4, 9), la pluralité (1) de composants de l'installation (2, 3, 4, 9) comprenant une extrudeuse (2) et un dispositif collecteur (4), destiné à collecter les matières plastiques extrudées,
l'installation d'extrusion de matière plastique comprenant une interface utilisateur (5),
l'interface utilisateur (5) étant conçue pour la saisie et pour l'édition de données de l'installation d'extrusion de matière plastique, l'interface utilisateur (5) comprenant un terminal mobile pourvu d'un écran (6) doté d'une surface graphique, l'interface utilisateur (5) contenant une caméra (7),
à l'installation d'extrusion de matière plastique étant affectée au moins une source d'information (8, 11, 13, 14) et de préférence une pluralité de sources d'information (8, 11, 13, 14), l'interface utilisateur (5) étant conçue de sorte à accéder à l'au moins une source d'information (8, 11, 13, 14) et de préférence à la pluralité de sources d'information (8, 11, 13, 14),
**caractérisée en ce que** l'interface utilisateur (5) comprend un module de lecture (7, 10) et **en ce que** le module de lecture (7, 10) est conçu de sorte à pouvoir identifier, à l'aide de données de lecture concernant un composant de l'installation (2, 3, 4, 9) le composant de l'installation (2, 3, 4, 9),
l'interface utilisateur (5) étant contextuelle et conçue pour représenter sur l'écran (6) de l'interface utilisateur (5) des informations provenant de l'au moins une source d'information (8, 11, 13, 14), respectivement de plusieurs parmi la pluralité de sources d'information (8, 11, 13, 14) concernant le composant de l'installation (2, 3, 4, 9) identifié, lesquelles informations allant au-delà du contenu informatif des données de lecture lues par l'intermédiaire du module de lecture (7, 10),
sur au moins un composant de l'installation (2, 3, 4, 9) étant placé un marqueur (15) et le module de lecture (7, 10) étant conçu pour lire le marqueur (15),
ou
conjointement avec un logiciel de reconnaissance d'objets, la caméra (7) constituant le module de lecture (7), destiné à identifier un ou plusieurs composants de l'installation (2, 3, 4, 9).
